# FASCICULE DE BREVET EUROPEEN

(11) **EP 4 222 365 B1**
(45) Date de publication et mention de la délivrance du brevet: **22.10.2025**
(21) Numéro de dépôt: 21770074.9
(22) Date de dépôt: 14.09.2021
(51) Int. Cl.: F02G 1/053

(54) **MOTEUR À CYCLE STIRLING**
STIRLING-KREISLAUFMASCHINE
STIRLING CYCLE ENGINE

(30) Priorité: 29.09.2020 FR 2009877
(43) Date de publication de la demande: 09.08.2023
(60) Demande divisionnaire: 25185334.7
(73) Titulaire: Dupas, Benjamin, 63200 Riom (FR)
(72) Inventeur: Dupas, Benjamin, 63200 Riom (FR)
(74) Mandataire: Gabriel, Franck
(86) Numéro de dépôt international: PCT/IB2021/058332
(87) Numéro de publication internationale: WO 2022/069981

(56) Documents cités:
- EP-A1- 0 005 566
- EP-A1- 2 740 922
- WO-A1-2007/019815
- WO-A1-2019/028491
- BE-A3- 1 018 375
- US-A- 4 532 767

## Description

### DOMAINE TECHNIQUE DE L'INVENTION

La présente invention concerne un moteur à cycle Stirling comprenant un ensemble de pistons et cylindres, chacun des cylindres comportant une zone chaude et une zone froide.

### ETAT DE LA TECHNIQUE ANTERIEURE

Bien qu'assez peu connu, le moteur à cycle de Stirling existe depuis le début du 19^{e} siècle, depuis sa conception par Robert Stirling. Plusieurs types d'applications ont été mises en oeuvre à l'aide de ce type de moteur, comme par exemple des chaudières à cogénération, des générateurs d'électricité, des groupes propulseurs pour des applications navales, etc.

Le moteur à cycle de Stirling est un moteur à combustion externe, utilisant un fluide ou gaz de travail en circuit fermé pour produire un travail et ainsi permettre de générer de l'énergie mécanique. Le fluide est soumis à quatre phases successives selon un cycle théorique comme suit : chauffage à volume constant, détente isotherme, refroidissement à volume constant, compression isotherme. En pratique cependant, les pertes à divers niveaux ont pour résultat que le cycle réel est moins favorable que le cycle théorique.

Les moteurs à cycle de Stirling existent selon plusieurs types de déclinaisons, soit alpha, bêta ou gamma. Le moteur Stirling alpha utilise deux pistons (ou plus), soit un piston chaud moteur et un piston froid déplaceur. Un gaz de travail permet d'actionner les pistons en fonction du cycle de Stirling. Le moteur alpha à double effet est une mise en série de plusieurs moteurs alpha. Le piston unique a une double fonction de « déplaceur » et de « moteur », d'où sont appellation à « double effet ». Un déphasage de 90° est prévu entre chacun des pistons.

Le moteur bêta fonctionne avec deux pistons mobiles dans un même cylindre comportant une zone chaude et une zone froide. Le moteur gamma comporte un cylindre avec piston moteur et un cylindre avec piston déplaceur.

Robert Stirling a grandement contribué à améliorer le cycle en ajoutant un régénérateur, agissant en tant qu'accumulateur thermique. Le régénérateur présente cependant de nombreuses limitations et inconvénients affectant le rendement et le niveau de fiabilité du moteur.

De façon générale, le rendement d'un moteur à cycle de Stirling dépend en outre de l'écart de température entre la zone chaude et la zone froide. Il est donc important de prévoir un bon niveau d'isolation entre ces deux zones pour éviter toute chute du rendement.

Le document FR3090749 décrit un moteur Stirling de type beta pouvant fonctionner en mode moteur ou en mode pompe à chaleur ou en mode frigorifique. La machine Stirling comprend une partie froide et une partie chaude, un piston déplaceur comprenant une zone de frottement, un piston moteur comprenant une zone de frottement. La machine Stirling comprend une unique chemise disposée dans la partie froide de la machine Stirling fonctionnant en mode moteur ou en mode pompe à chaleur, ou respectivement dans la partie chaude de la machine Stirling fonctionnant en mode frigorifique, dans laquelle coulissent les zones de frottement du piston déplaceur et du piston moteur.

Le document FR2972030 décrit un moteur de Stirling comportant au moins un arbre moteur, une source froide, une source chaude et un circuit de circulation de gaz comprenant un canal de refroidissement en contact avec la source froide et un canal de chauffage en contact avec la source chaude, le canal de refroidissement et le canal de chauffage se présentant sous la forme d'un tube souple. L'arbre moteur comporte des moyens de partition agencés pour partitionner le circuit de circulation en une pluralité de volumes de gaz indépendants. Les moyens de partition sont adaptés pour être déplacés par le gaz des volumes de gaz au cours du cycle thermodynamique du moteur de manière à entrainer l'arbre moteur en rotation. Les moyens de partition sont en contact avec le canal de refroidissement et le canal de chauffage.

Le document BE1018375 décrit un moteur Stirling de type gamma comportant une isolation thermique externe.

Le document WO2019028491 décrit un moteur à cycle Brayton comportant des isolants thermiques disposés sur les pistons.

Le document EP2740922 décrit un moteur Stirling dont les pistons comportent des zones conductrices et des zones isolantes.

Le document WO2007019815 décrit un moteur Stirling comportant deux agencements à doubles pistons.

Toutes ces architectures sont complexes à mettre en oeuvre, coûteuses, avec des niveaux de performances perfectibles.

Pour pallier les différents inconvénients préalablement évoqués, l'invention prévoit différents moyens techniques.

### EXPOSE DE L'INVENTION

Tout d'abord, un premier objet de l'invention consiste à prévoir un moteur à cycle Stirling de conception simple, avec un rendement amélioré.

Un autre objet de l'invention consiste à prévoir un moteur à cycle Stirling à haut rendement et haut niveau de fiabilité.

Pour ce faire, l'invention prévoit un moteur à cycle Stirling comprenant un ensemble de pistons et cylindres chacun des cylindres comportant une zone chaude et une zone froide, dans lequel chacun des pistons comporte un corps de piston relié à une tige de piston et une tête de piston isolante agencée en extrémité du corps de piston, chacun des cylindres comportant par ailleurs un anneau isolant agencé entre la zone chaude et la zone froide dudit cylindre, dans lequel la longueur de la tête de piston est supérieure à la longueur de la zone chaude.

Cette caractéristique permet un fonctionnement dans lequel seule la tête de piston pénètre dans la zone chaude, le corps du piston restant constamment dans la zone froide, procurant ainsi une isolation optimale entre la zone chaude et la zone froide. Les risques de transfert thermique de la zone chaude vers la zone froide par conduction entre la zone chaude et le corps du piston sont minimisés.

De manière avantageuse, la longueur de la tête de piston ainsi que la longueur et la position axiale de l'anneau isolant sont prévus de façon à ce que la tête de piston soit toujours en contact avec l'anneau isolant quelle que soit la position du piston le long de sa course de fonctionnement normal.

Selon un mode de réalisation avantageux, le matériau de la tête de piston isolante et/ou de l'anneau isolant est un matériau céramique.

Ce type de matériau, à très faible coefficient de conductivité thermique, permet d'effectuer un découplage thermique efficace entre la zone chaude et la zone froide.

Selon un autre mode de réalisation avantageux, le moteur est de type alpha avec quatre pistons à double effet agissants sur quatre volumes (A, B, C, D) remplis de gaz de travail et déphasés de 90° selon le cycle de Stirling. Selon les modes de réalisation, on prévoit une disposition des cylindres en ligne, en V ou en cercle, ou autre.

Ce type d'architecture permet de réaliser des moteurs simples, efficaces, à des coûts attractifs.

Selon encore un mode de réalisation avantageux, le moteur à cycle Stirling comprend au moins deux échangeurs de chaleur (en remplacement d'un ou plus régénérateur) chacun des échangeurs comportant deux circuits d'échange, chacun des circuits d'échange assurant une liaison fluidique entre les cylindres permettant de définir un volume.

Ce mode de réalisation permet de supprimer un élément complexe, coûteux, et de fiabilité aléatoire, par un élément simple, très fiable, et à coût modique, permettant par ailleurs d'améliorer le rendement thermique du moteur.

De manière avantageuse, le moteur comprend un échangeur de chaleur unique intégrant l'ensemble des circuits d'échanges du moteur.

Selon un mode de réalisation avantageux, l'échangeur de chaleur unique est en forme d'enroulement et est disposé entre les cylindres du moteur.

Selon encore un mode de réalisation avantageux, le moteur comprend un module de transformation du mouvement alternatif axial des tiges de pistons en mouvement rotatif, ledit module comportant un axe de rotation de sortie commandé en rotation par un plateau cyclique annulaire connecté d'une part aux tiges de pistons, et d'autres part à l'axe de rotation de sortie, une noix d'inclinaison bi-axiale servant d'interface entre le plateau cyclique annulaire et l'axe de rotation de sortie.

De manière avantageuse, la noix d'inclinaison comprend une ouverture cylindrique interne d'axe R-R servant de logement à l'axe de rotation de sortie et une bague cylindrique externe d'axe P-P prévue pour interfacer avec le plateau cyclique par l'entremise de roulements, l'axe R-R de l'ouverture cylindrique interne et l'axe P-P de la bague cylindrique externe formant entre eux un angle Ω compris entre 15° et 40° en position d'inclinaison maximale du plateau cyclique, et plus préférentiellement entre 18°et 22°.

Le plateau cyclique annulaire est susceptible de se déplacer selon un cycle sinusoïdal en fonction du déplacement des tiges de piston de façon à générer un mouvement rotationnel de l'axe de rotation de sortie.

De manière avantageuse, le moteur comporte un châssis dans lequel l'axe de rotation de sortie traverse la noix d'inclinaison et est fixé libre en rotation au châssis à ses deux extrémités.

Ce montage par les deux extrémités, sans porte-à-faux, procure une grande robustesse et facilite l'absorption des vibrations.

Ces caractéristiques permettent de concevoir un système simple à fabriquer, la noix d'inclinaison étant plus facile à usiner qu'un axe complet. Le système est ensuite facile à assembler.

### DESCRIPTION DES FIGURES

Tous les détails de réalisation sont donnés dans la description qui suit, complétée par les figures 1 à 16, présentées uniquement à des fins d'exemples non limitatifs, et dans lesquelles:
- la figure 1 est une vue de côté d'un exemple de moteur à cycle de Stirling ;
- la figure 2 est une vue en coupe d'un exemple de cylindre pour un moteur tel que celui de la figure 1;
- la figure 3 montre le cylindre de la figure 2 avec le piston en fin de course ;
- la figure 4 est une représentation schématique illustrant les volumes de travail et l'évolution d'un cycle de Stirling pour une mise en œuvre de type connue ;
- la figure 5 est une représentation schématique illustrant les volumes de travail et l'évolution d'un cycle de Stirling pour une mise en oeuvre selon un exemple de réalisation de l'invention ;
- la figure 6 est une représentation schématique illustrant les volumes de travail et l'évolution d'un cycle de Stirling pour une mise en oeuvre selon un autre exemple de réalisation de l'invention ;
- la figure 7 illustre l'exemple de la figure 6 selon un autre mode de représentation ;
- la figure 8 montre une vue en coupe partielle d'un exemple de moteur ;
- la figure 9 montre un exemple de système de transformation de mouvement ;
- la figure 10 est une vue en coupe du système de la figure 9 selon une première position de fonctionnement ;
- la figure 11 est une vue en coupe du système de la figure 9 selon une seconde position de fonctionnement ;
- la figure 12 est une vue en perspective de certains éléments du système de transformation de mouvement ;
- la figure 13 est une autre vue en perspective de certains éléments du système de transformation de mouvement ;
- la figure 14 est une représentation schématique d'un premier exemple d'application d'un moteur à cycle Stirling selon l'invention ;
- la figure 15 est une représentation schématique d'un second exemple d'application d'un moteur à cycle Stirling selon l'invention ;
- la figure 16 est une représentation schématique d'un troisième exemple d'application d'un moteur à cycle Stirling selon l'invention.

### DESCRIPTION DETAILLEE DE L'INVENTION

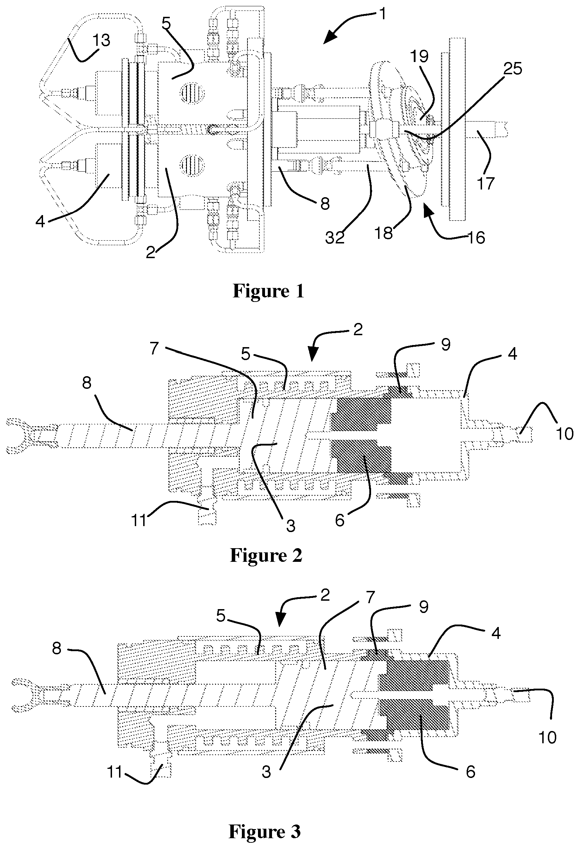

La figure 1 illustre un exemple de moteur 1 à cycle Stirling. Le moteur 1 comporte une pluralité de cylindres 2, soit quatre dans cet exemple. Pour chacun des cylindres, une zone chaude 4 et une zone froide 5 sont prévues pour assurer le bon fonctionnement selon le cycle de Stirling. Ce cycle implique un gaz de travail. On utilise classiquement des gaz tels que l'air, l'hydrogène ou l'hélium par exemple. Dans cet exemple, le gaz est acheminé entre les zones de travail à l'aide de tubulures ou conduits 13, en communication fluidique avec les cylindres 2 par l'entremise d'orifices d'accès 10 aux zones chaudes et d'orifices d'accès 11 aux zones froides.

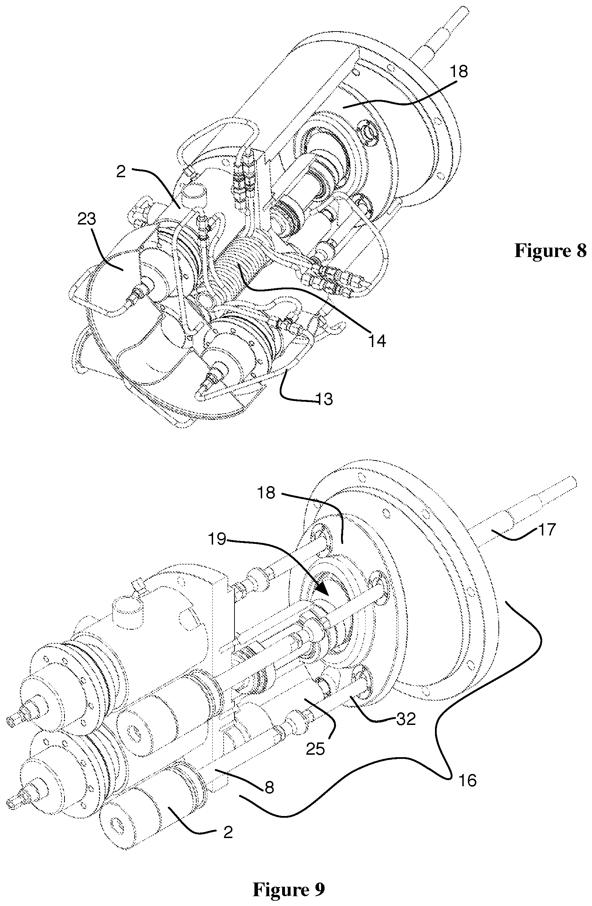

Comme le moteur en lui-même produit à la sortie un déplacement en translation des tiges 8 de pistons, dans la plupart des utilisations, il est utile de coupler au moteur un module 16 de transformation du mouvement de translation des tiges de pistons, en mouvement rotatif d'un arbre 17 de sortie, plus commun à utiliser en tant que source d'énergie mécanique pour actionner un système couplé au moteur. Une chambre de combustion 23 (voir figure 8), agencée autour des zones chaudes 4 des cylindres, permet de fournir l'apport calorifique requis pour ces zones.

Pour optimiser le rendement, le moteur peut prévoir l'utilisation d'échangeurs 12 de chaleur en remplacement des régénérateurs de l'art antérieur. Ces caractéristiques sont décrites plus loin dans ce document.

Dans l'exemple illustré, le moteur comporte un module 16 de transformation du mouvement axial alternatif des tiges 8 de pistons en mouvement rotatif d'un axe 17 de rotation de sortie. Ces caractéristiques sont décrites en détails plus loin dans ce document.

Les cylindres peuvent prévoir une isolation thermique spécifique entre la zone chaude 4 et la zone froide 5. Ce mode de réalisation est décrit dans la section suivante.

### ISOLATION THERMIQUE ENTRE LA ZONE CHAUDE ET LA ZONE FROIDE

Les figures 2 et 3 illustrent des exemples de réalisation de caractéristiques permettant d'améliorer le niveau de découplage thermique entre la zone chaude 4 et la zone froide 5 d'un cylindre 2. A des fins de simplification, les figures 2 et 3 illustrent un seul cylindre 2, bien que le moteur à cycle Stirling prévoit de préférence plusieurs cylindres. Tel qu'illustré, le piston 3 comporte un corps 7 de piston se prolongeant axialement hors de la zone froide 5 par une tige 8 de piston. Du côté opposé de la tige 8 de piston, une tête 6 de piston isolante est prévue. Cette tête est fixée au corps 7 du piston par exemple par vissage, collage ou autre. Le cylindre prévoit également un anneau 9 isolant (ou bague isolante) agencé entre la zone chaude 4 et la zone froide 5 du cylindre 2. Cet anneau sépare les deux zones 4 et 5 et les isole l'une de l'autre. Afin de réaliser un anneau 9 et une tête 6 de piston assurant un bon découplage thermique, on utilise un ou plusieurs matériaux avec un faible coefficient de conductivité thermique. Les matériaux de la tête 6 de piston et de l'anneau 9 isolant peuvent être identiques ou non. On utilise par exemple de l'oxyde de zirconium (ZrO2 + MgO-PSZ), un matériau céramique pour utilisation mécanique à haute température. On peut également utiliser de la mullite C610 (Alumine 62,6% / Silice: 35,15% / Oxyde de fer 0,82% / Oxyde de titane 0,39% / Oxyde de calcium 0,18%). Il s'agit également d'un matériau céramique pour utilisation mécanique à haute température. On peut aussi utiliser du béton cellulaire avec une couche d'émail. Il s'agit d'usiner une pièce en béton cellulaire sur laquelle on vient déposer une couche d'émail (poudre de verre ou autre) afin d'augmenter les caractéristiques mécaniques globales de la pièce, l'état de surface (polissage de l'émail) pour les portées de joints et supprimer la porosité susceptible d'engendrer des fuites du gaz de travail. On peut également prévoir l'utilisation de terre ou argile cuite avec une couche d'émail. On réalise par exemple un moulage d'une pièce en terre cuite sur laquelle on vient déposer une couche d'émail (poudre de verre ou autre) afin d'augmenter les caractéristiques mécaniques globales de la pièce, l'état de surface (polissage de l'émail) pour les portées de joints et supprimer la porosité susceptible d'engendrer des fuites du gaz de travail. On peut encore utiliser un matériau connu sous la dénomination commerciale « MACOR ». Ce matériau présente l'avantage d'un matériau céramique particulièrement adapté pour être facilement usinable.

Tel que montré à la figure 3, pour éviter tout contact entre le corps 7 du piston (réalisé en matériau conducteur) et la zone chaude 4 du cylindre, la tête 6 de piston comporte une longueur au moins égale, et de préférence supérieure à celle de la zone chaude 4 du cylindre. Le corps 7 du piston ne peut donc pas absorber les calories de la zone chaude 4 par conduction thermique directe entre ces deux éléments.

Egalement tel qu'illustré par les positions extrêmes du piston aux figures 2 et 3, la position axiale de l'anneau 9 isolant ainsi que la longueur de la tête 6 de piston sont prévus de façon à ce que la tête 6 de piston et l'anneau 9 isolant soient toujours en contact l'un avec l'autre, quelle que soit la position du piston 3 le long de sa course de fonctionnement normal. Il est à noter que cette solution de découplage thermique s'applique aux moteurs Stirling à double effet à quatre cylindres ou tout multiple de quatre.

Ce mode de découplage thermique peut être utilisé avec ou sans les échangeurs de chaleur, et avec ou sans le module de transformation du mouvement décrits dans les sections suivantes de ce document.

### UTILISATION D'ECHANGEURS DE CHALEUR

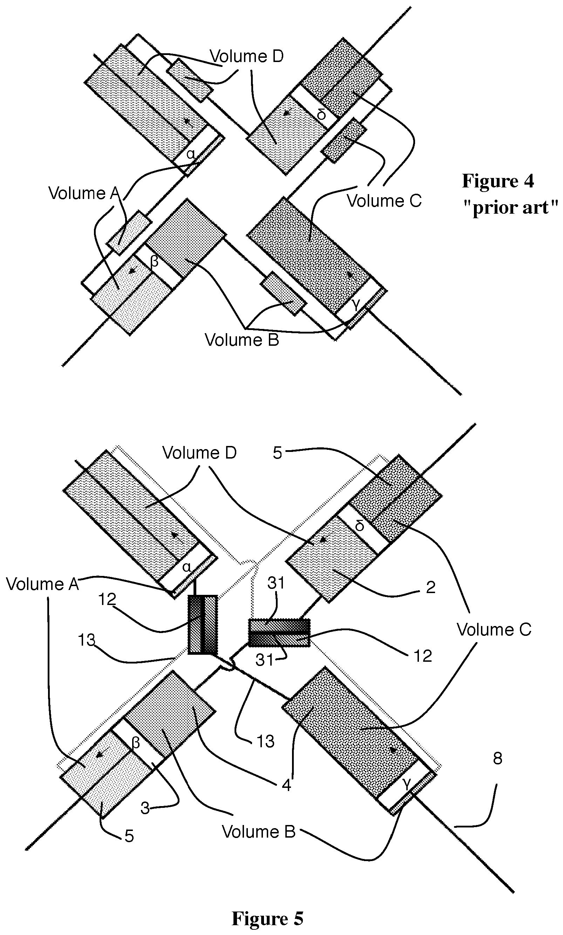

La figure 4 est une représentation schématique d'un exemple connu de moteur à cycle Stirling de type alpha avec quatre pistons double effet, utilisant un ou plusieurs régénérateurs pour absorber les calories du gaz chaud lors de la phase de refroidissement et restituer ces calories lors de la phase de chauffage. Le ou les régénérateurs agissent à l'image de condensateurs pour stocker les calories du gaz pendant une période de temps très courte pour ensuite les restituer. Les contraintes et limitations physiques des régénérateurs limitent le rendement des moteurs à cycle Stirling.

Pour éviter ces limitations, l'inventeur a conçu un moteur à cycle Stirling comprenant au moins deux échangeurs 12 de chaleur. Les échangeurs remplissent la fonction antérieurement dévolue aux régénérateurs, sans les inconvénients inhérents aux régénérateurs. Chaque échangeur 12 de chaleur comporte deux circuits 31 d'échange de chaleur couplés en eux de façon à assurer un bon transfert thermique entre les deux.

La zone chaude se situe sur la zone centrale du schéma ou converge les quatre têtes de cylindre. La zone froide se situe sur les quatre parties opposées des cylindres en périphérie du schéma.

Les volumes de gaz de travail se situent entre deux pistons déphasé de 90°, ainsi le volume A est situé au dessus de la tête du piston α (côté sans tige) et en dessous de la tête du piston β (côté tige) et identifié par des petit points. De même le volume B est situé au dessus de la tête du piston β (côté sans tige) et en dessous de la tête du piston y (côté tige) et identifié par une couleur unie grise. De même le volume C est situé au dessus de la tête du piston γ (côté sans tige) et en dessous de la tête du piston δ (côté tige) et identifié par des gros points. De même le volume D est situé au dessus de la tête du piston δ (côté sans tige) et en dessous de la tête du piston α (côté tige) et identifié par des vaguelettes.

Chaque volume de travail se trouve dans une des quatre phases du cycle de Stirling (chauffage, détente, refroidissement, compression). Le moteur tournant, chaque volume est amené, avec un déphasage de 90° entre chacun, à décrire les quatre phases du cycle dans l'ordre. Par convention un piston qui descend se déplace vers la zone froide du cylindre en périphérie et un piston qui monte se déplace vers la zone chaude centrale.

Le volume A est en phase de chauffage, le piston β descend et expulse le gaz froid se trouvant en bas du cylindre vers le régénérateur. Le gaz récupère les calories stockées dans le régénérateur puis termine son chauffage dans la tête chaude au dessus du piston α qui descend lui aussi pour accueillir le gaz à chauffer.

Le volume B est en phase de détente, le gaz chauffé est monté en pression, il pousse le piston β qui descend et le piston γ qui monte. On récupère ainsi le travail mécanique du cycle qui, via un mécanisme de conversion, entraine le mouvement de l'ensemble des pistons.

Le volume C est en phase de refroidissement, le piston γ monte et expulse le gaz chaud se trouvant en bas du cylindre vers le régénérateur. Le gaz dépose des calories dans le régénérateur puis achève son refroidissement dans la tête froide en dessous du piston δ qui monte lui aussi pour accueillir le gaz à refroidir.

Le volume D est en phase de compression : on consomme du travail pour comprimer le gaz refroidi qui sera plus apte à absorber des calories, le piston δ monte et le piston α descend simultanément afin de comprimer le gaz de travail dans la zone froide en dessous du piston α (côté tige).

Dans le mode de réalisation de la figure 5, les régénérateurs sont remplacés par des échangeurs de chaleur 12. Ce mode de réalisation est possible sur des moteurs avec cycle Stirling alpha à quatre pistons, huit pistons, ou tout multiple de quatre pistons, à double effet.

Tel qu'illustré, un échangeur de chaleur 12 bidirectionnel est connecté d'une part entre la zone chaude 4 au dessus de la tête du piston α (côté sans tige) et la zone froide 5 en dessous de la tête du piston β (côté tige) et d'autre part entre la zone chaude 4 au dessus de la tête du piston γ (côté sans tige) et la zone froide 5 en dessous de la tête du piston δ (côté tige). Ainsi lorsque le volume A en phase de chauffage et le volume C en phase de refroidissement traversent l'échangeur 12, ils s'échangent des calories du volume C vers le volume A et vice versa lorsque le volume A passe en phase de refroidissement et le volume C en phase de chauffage. Un second échangeur de chaleur 12 bidirectionnel est connecté d'une part entre la zone chaude 4 au dessus de la tête du piston β (côté sans tige) et la zone froide 5 en dessous de la tête du piston γ (côté tige) et d'autre part entre la zone chaude 4 au dessus de la tête du piston δ (côté sans tige) et la zone froide 5 en dessous de la tête du piston α (côté tige). Ainsi lorsque le volume B en phase de chauffage et le volume D en phase de refroidissement traversent l'échangeur, ils s'échangent des calories du volume D vers le volume B et vice versa lorsque le volume B passe en phase de refroidissement et le volume D en phase de chauffage.

II en résulte des échangeurs 12 à contre courant ou le gaz de travail passe alternativement dans un sens et dans l'autre par la même canalisation (bidirectionnelle) en fonction de son besoin à augmenter son niveau calorifique ou à se refroidir. En variante, les deux échangeurs 12 peuvent être couplés pour former un échangeur unique à quatre entrées/sorties.

Ce mode de réalisation offre l'avantage d'un faible coût, avec uniquement deux échangeurs de chaleur 12, une fiabilité élevée inhérente à la technologie simple et robuste des échangeurs de chaleur, une optimisation du fonctionnement avec la partie chaude de l'échangeur qui reste chaude pendant les différents cycles, et la partie froide de l'échangeur qui reste froide, évitant les chocs thermiques. Par contre, ce mode de réalisation, avec des flux gazeux à double sens, peut présenter des risques de pertes de charge.

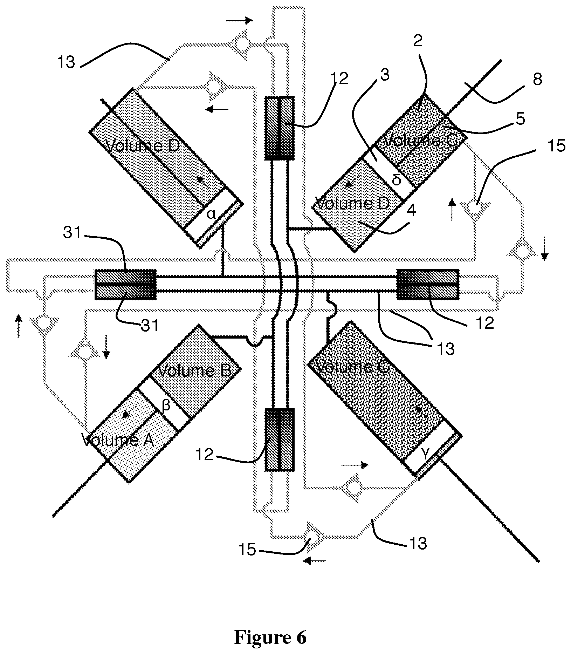

Afin d'optimiser davantage le rendement et les performances, la figure 6 illustre un mode de réalisation avec des flux unidirectionnels dans les échangeurs de chaleur 12 et des clapets anti-retour 15, réalisant ainsi un système symétrique du point de vue des flux thermiques. Pour ce faire, chaque cylindre est relié à un double échangeur de chaleur 12. Dans cet exemple, un moteur quatre cylindres comporte donc quatre échangeurs.

Tel qu'illustré, deux échangeurs de chaleur 12 unidirectionnels sont connectés d'une part entre la zone chaude 4 au dessus de la tête du piston α (côté sans tige) et la zone froide 5 en dessous de la tête du piston β (côté tige) et d'autre part entre la zone chaude 4 au dessus de la tête du piston γ (côté sans tige) et la zone froide 5 en dessous de la tête du piston δ (côté tige). Quatre clapets 15 anti-retour sont positionnés sur les deux lignes de connectiques 13 des volumes de gaz de travail A et C forçant la circulation d'une part par l'échangeur à gauche de la figure lorsque le volume A est en phase de chauffage et le volume C en phase de refroidissement et d'autre part par l'échangeur à droite de la figure lorsque le volume A est en phase de refroidissement et le volume C en phase de chauffage.

Deux échangeurs de chaleur 12 unidirectionnels sont connectés d'une part entre la zone chaude 4 au dessus de la tête du piston β (côté sans tige) et la zone froide 5 en dessous de la tête du piston γ (côté tige) et d'autre part entre la zone chaude 4 au dessus de la tête du piston δ (côté sans tige) et la zone froide 5 en dessous de la tête du piston α (côté tige). Quatre clapets 15 anti-retour sont positionnés sur les deux lignes de connectiques 13 des volumes de gaz de travail B et D forçant la circulation d'une part par l'échangeur en bas de la figure lorsque le volume B est en phase de chauffage et le volume C en phase de refroidissement et d'autre part par l'échangeur en haut de la figure lorsque le volume B est en phase de refroidissement et le volume D en phase de chauffage.

II en résulte des échangeurs totalement dédiés à une configuration d'un couple de volume de gaz de travail opposé et permettant une circulation unidirectionnelle permanente dans chaque échangeur.

Ce mode de réalisation présente des performances élevées du fait de flux unidirectionnels dans les échangeurs et de la symétrie thermique du système.

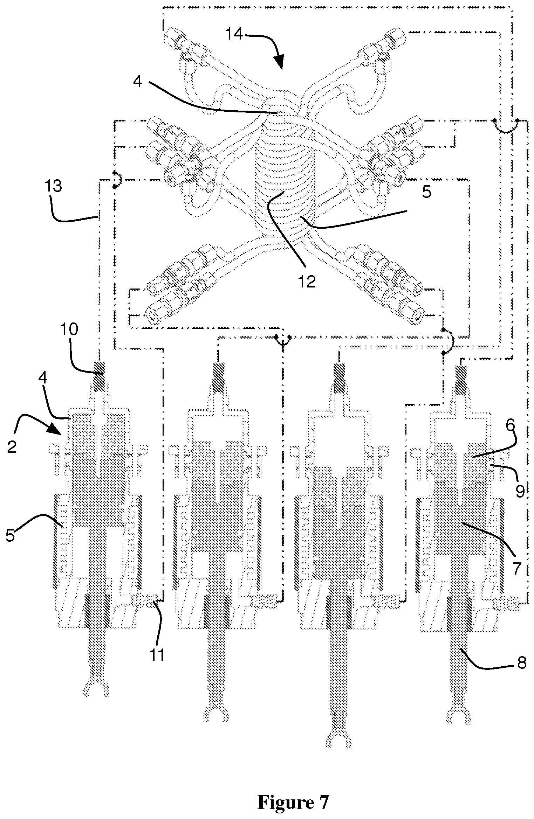

Les figures 7 et 8 présentent un exemple avantageux de mise en oeuvre pratique utilisant un échangeur de chaleur en forme d'enroulement 14. L'ensemble des circuits des échangeurs 12 sont réunis sous forme d'un bobinage spiralé de tubes dans lequel chaque connexion chaude se trouve au plus près des têtes chaudes de chaque cylindre (sur la figure 7 en partie haute de l'échangeur) et chaque connexion froide se trouve au plus près des têtes froides de chaque cylindre (sur la figure 7 en partie basse de l'échangeur). Il en résulte un gradient global de chaleur dans l'échangeur du plus froid (en bas à la figure 7) vers le plus chaud (en haut à la figure 7). Ce mode de réalisation concerne plus particulièrement les moteurs à cycle de Stirling avec quatre pistons à double effet ou un multiple de quatre. La figure 8 montre l'intégration de l'enroulement 14 entre les quatre cylindres 2 du moteur.

Ce mode de réalisation avec échangeur de chaleur peut être utilisé avec ou sans le découplage thermique préalablement décrit, et avec ou sans le module de transformation du mouvement décrit dans la section suivante de ce document.

### MODULE DE TRANSFORMATION DU MOUVEMENT

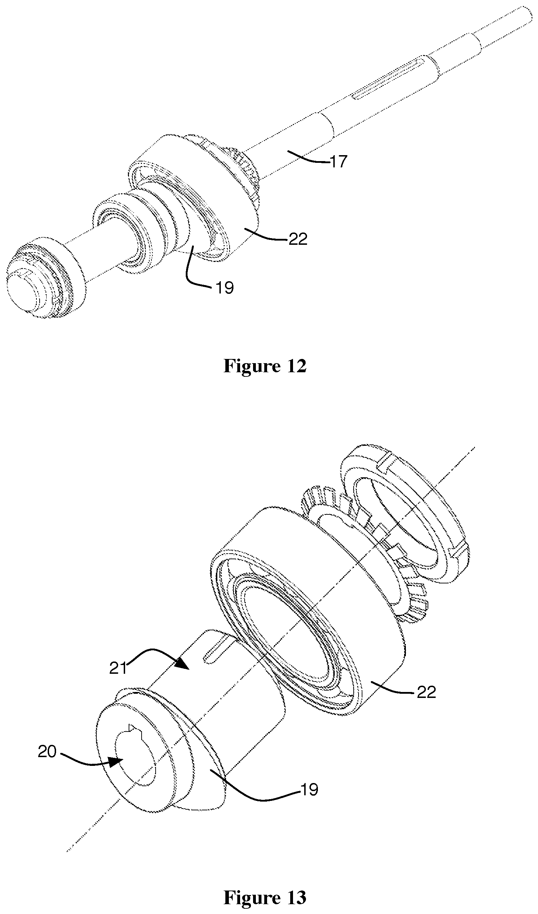

Selon un autre mode de réalisation, illustré dans les exemples des figures 9 à 13, le moteur à cycle Stirling comprend un module 16 de transformation du mouvement alternatif axial des tiges 8 de pistons en mouvement rotatif d'un axe de rotation 17 de sortie commandé en rotation par un plateau cyclique 18 annulaire connecté d'une part aux tiges 8 de pistons par l'intermédiaire de bielles 32, et d'autres part à l'axe de rotation 17 de sortie. Une noix 19 d'inclinaison bi-axiale sert d'interface entre le plateau cyclique 18 annulaire et l'axe de rotation 17 de sortie.

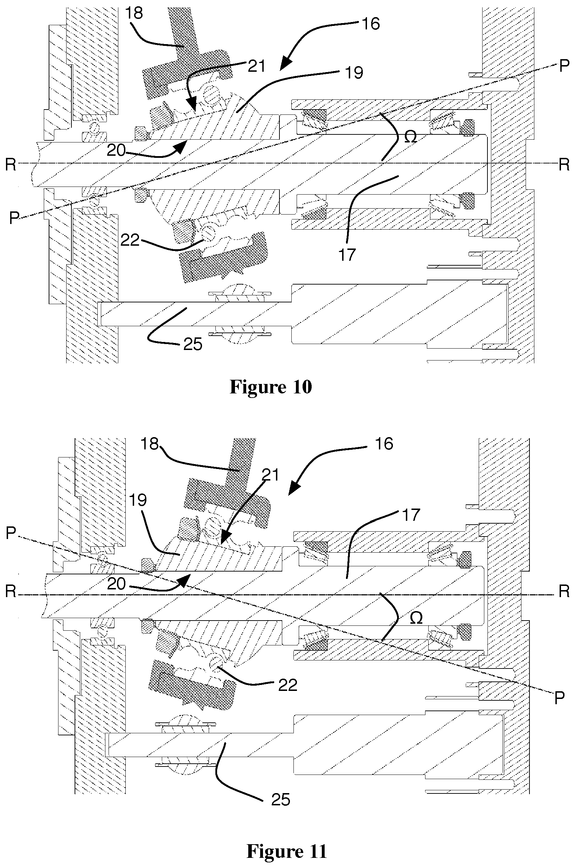

La noix 19 d'inclinaison est conçue pour former une interface bi-axiale entre le plateau cyclique 18 et l'axe de rotation 17 de sortie. Tel qu'illustré aux figures 10 et 11, la noix d'inclinaison comporte, en zone centrale, une ouverture 20 cylindrique interne d'axe R-R permettant de loger l'axe de rotation 17 de sortie. Le pourtour externe de la noix d'inclinaison forme une bague 21 cylindrique externe d'axe P-P. Cette bague 21 cylindrique coopère avec le plateau cyclique par l'entremise de roulements 22. Le plateau cyclique 18 forme un anneau entourant la noix 19 d'inclinaison et sur lequel sont fixées les extrémités des bielles 32.

L'axe R-R de l'ouverture cylindrique interne et l'axe P-P de la bague cylindrique externe forment entre eux un angle Ω compris entre 15° et 40° en position d'inclinaison maximale du plateau cyclique, et plus préférentiellement entre 18° et 22°.

En suivant les déplacements axiaux des tiges 8 selon le cycle de fonctionnement du moteur, le plateau cyclique 18 effectue un mouvement sinusoïdal autour d'un point de pivotement situé à l'intersection des axes R-R et P-P, générant un mouvement de rotation de l'axe de rotation 17 de sortie. Les figures 10 et 11 illustrent le module en deux positions distinctes. Le mouvement pivotant de la noix 19 d'inclinaison est ainsi bien visible. Pour éviter que le plateau cyclique ne tourne, ce dernier coopère avec une tige anti-rotation 25 par l'entremise d'un palier lisse ou autre agencement permettant au plateau cyclique de coulisser le long de la tige. Cet élément est bien visible aux figures 1, 9, 10 et 11.

Le moteur 1 comporte par ailleurs un châssis et l'axe de rotation 17 de sortie traverse la noix d'inclinaison 19 et est fixé, libre en rotation, au châssis à ses deux extrémités.

Ce mode de réalisation concerne plus particulièrement les moteurs à cycle de Stirling avec quatre pistons à double effet.

Ce mode de réalisation avec module de transformation du mouvement peut être utilisé avec ou sans découplage thermique et avec ou sans les échangeurs de chaleur tels que décrits dans les sections précédentes de ce document.

### APPLICATION POUR CHAUDIERE DE CO-GENERATION

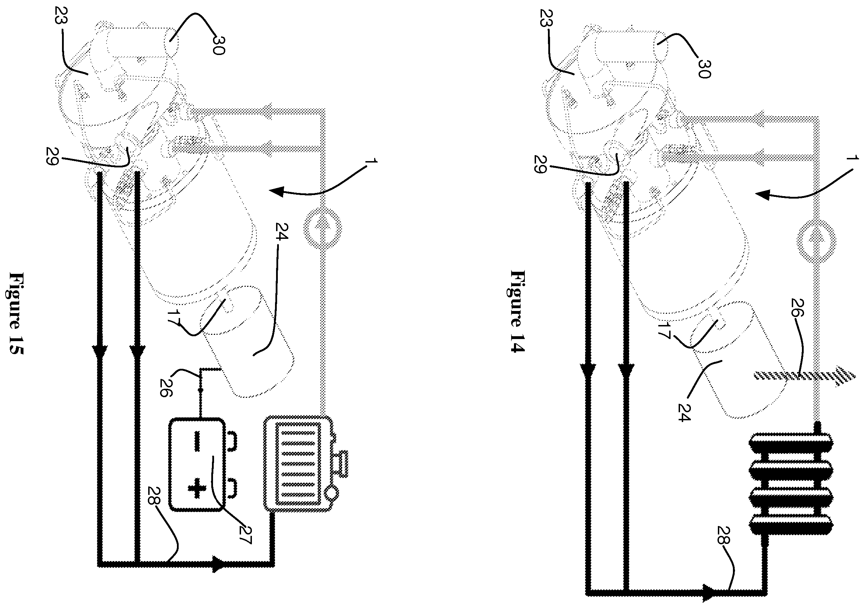

La figure 14 illustre un exemple d'application d'un moteur 1 tel que préalablement décrit pour une chaudière à cogénération. Le moteur 1 Stirling comporte une chambre de combustion 23 permettant de fournir l'apport calorifique requis pour les zones chaudes des cylindres. L'alimentation en carburant 29 apportée pour la combustion dans la chambre de combustion 23 peut être de tout type, bois, biogaz, gaz naturel, hydrogène, fioul, etc. Une sortie 30 d'échappement permet aux gaz de combustion de sortir de la chambre de combustion. Il comporte une source froide ou zone de refroidissement et un module de conversion du mouvement. Il comporte avantageusement un système de découplage thermique et/ou un système d'échangeurs tels que préalablement décrits.

Un alternateur 24 est connecté sur l'arbre 17 de sortie et utilise l'énergie mécanique produite par le moteur 1 Stirling pour produire du courant électrique 26 utilisable par exemple pour l'alimentation électrique d'un bâtiment.

Le moteur à cycle de Stirling permet, en plus de la production d'énergie électrique, de fournir une énergie thermique. Un circuit 28 de refroidissement du moteur 1 permet de capter la chaleur du moteur pour permettre de réaliser une alimentation en chaleur du bâtiment. Ce circuit récupère les calories non transformées par le cycle de Stirling.

En variante, il est possible d'augmenter encore le rendement global de l'ensemble de la chaudière en ajoutant un échangeur de récupération des calories par condensation des fumées de combustion.

### APPLICATION POUR RECHARGE DE BATTERIE D'UN VEHICULE

La figure 15 illustre un exemple d'application d'un moteur 1 tel que préalablement décrit pour un véhicule électrique. Le moteur 1 Stirling comporte une chambre de combustion 23 permettant de fournir l'apport calorifique requis pour les zones chaudes des cylindres. L'alimentation en carburant 29 apportée pour la combustion dans la chambre de combustion 23 peut être de tout type, essence, diesel, GPL, hydrogène, etc. Une sortie 30 d'échappement permet aux gaz de combustion de sortir de la chambre de combustion. Le moteur comporte une source froide ou zone de refroidissement et un module de conversion du mouvement. Il comporte avantageusement un système de découplage thermique et/ou un système d'échangeurs tels que préalablement décrits.

Un alternateur 24 est connecté sur l'arbre 17 de sortie et utilise l'énergie mécanique produite par le moteur 1 Stirling pour produire du courant électrique 26 utilisable par exemple pour la recharge de la batterie 27 du véhicule électrique. Le véhicule comporte un ou plusieurs moteurs électriques servant à la propulsion du véhicule. Un circuit 28 de refroidissement du moteur 1 permet d'évacuer la chaleur du moteur, par récupération des calories non transformées par le cycle de Stirling.

Dans cet exemple, le moteur Stirling est isolé des aléas de demande de puissance inhérente au fonctionnement du véhicule, il fonctionne en régime constant lui permettant d'avoir un rendement élevé. Son fonctionnement permet de produire une certaine quantité d'électricité, utilisable pour alimenter le ou les moteurs électriques du véhicule. La consommation électrique du véhicule étant variable, la batterie permet d'agir comme réserve tampon lorsque la charge demandée est supérieure à celle que l'alternateur peut fournir. A contrario, lorsque la charge demandée est inférieure à celle fournie par l'alternateur, la batterie se recharge. En cas de sollicitation très faible, le moteur thermique peut être arrêté.

Une telle configuration permet par exemple de diminuer considérablement la capacité de la batterie par rapport à un véhicule électrique classique. Le moteur à cycle de Stirling permet de compenser la réduction de capacité. La batterie est dimensionnée pour un fonctionnement moyen.

Le véhicule peut de plus rouler avec tout type de combustible émettant assez de chaleur pour faire fonctionner le moteur. Si le véhicule roule à l'essence avec un rendement de 40%, il sera alors définitivement moins polluant qu'un véhicule entièrement électrique dont la batterie aura été rechargée à l'aide d'électricité issue d'une centrale à charbon.

### APPLICATION POUR MICROCENTRALE ELECTRIQUE A ENERGIE RENOUVELLABLE

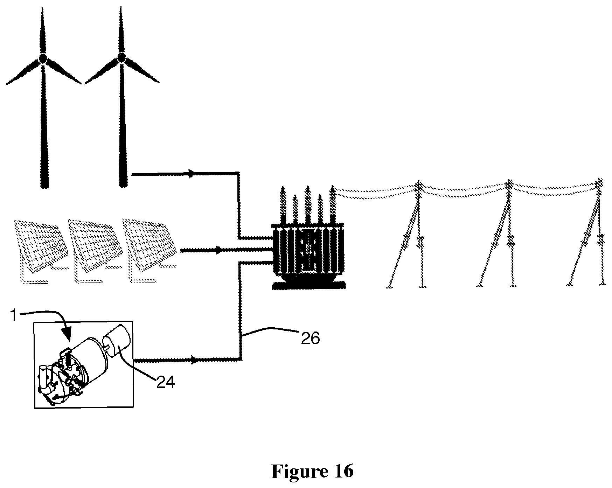

La figure 16 illustre un exemple d'application d'un ensemble moteur 1 et alternateur 24 tel que préalablement décrit faisant office de groupe électrogène pour un réseau électrique. Le moteur 1 comporte une source froide ou zone de refroidissement et un module de conversion du mouvement. Il comporte avantageusement un système de découplage thermique et/ou un système d'échangeurs tels que préalablement décrits.

Le groupe électrogène est raccordé à un réseau électrique principal ou plus avantageusement à un réseau « off-grid » ou « insulaire » par l'intermédiaire d'un poste de transformation. Le groupe électrogène vient par exemple en soutien et complément à des sources d'énergies renouvelables intermittentes classiques telles que les éoliennes et/ou panneaux solaires, raccordées au poste de transformation.

Le groupe électrogène apporte les avantages de flexibilité des énergies primaires utilisable (y compris des énergies renouvelable comme le bois ou le biogaz), un haut rendement, bien supérieur au groupe électrogène à combustion interne classique et une sécurité d'alimentation du réseau affranchie de l'intermittence due au soleil ou au vent.

### Numéros de référence employés sur les figures

- 1: Moteur à cycle Stirling
- 2: Cylindres
- 3: Pistons
- 4: Zone chaude
- 5: Zone froide
- 6: Tête de piston
- 7: Corps de piston
- 8: Tige de piston
- 9: Anneau isolant
- 10: Orifice d'accès gaz zone chaude
- 11: Orifice d'accès gaz zone froide
- 12: Echangeur de chaleur
- 13: Conduit gaz
- 14: Enroulement
- 15: Clapet anti-retour
- 16: Module de transformation de mouvement
- 17: Axe de rotation de sortie
- 18: Plateau cyclique
- 19: Noix d'inclinaison
- 20: Ouverture cylindrique interne
- 21: Bague cylindrique externe
- 22: Roulement du plateau cyclique
- 23: Chambre à combustion
- 24: Alternateur
- 25: Tige anti-rotation
- 26: Alimentation électrique
- 27: Batteries
- 28: Circuit de refroidissement
- 29: Alimentation en carburant
- 30: Sortie échappement
- 31: Circuit d'échange de chaleur
- 32: Bielle

## Revendications

1. Moteur (1) à cycle Stirling comprenant un ensemble de pistons (3) et cylindres (2), chacun des cylindres (2) comportant une zone chaude (4) et une zone froide (5), dans lesquels chacun des pistons (3) comporte un corps (7) de piston relié à une tige (8) de piston et une tête (6) de piston isolante agencée en extrémité du corps (7) de piston, chacun des cylindres (2) comportant par ailleurs un anneau (9) isolant agencé entre la zone chaude (4) et la zone froide (5) dudit cylindre (2), **caractérisé en ce que** la longueur de la tête (6) de piston est supérieure à la longueur de la zone chaude (4), et que le moteur est de type alpha avec quatre pistons à double effet agissants sur quatre volumes (A, B, C, D) remplis de gaz de travail et déphasés de 90° selon le cycle de Stirling, ledit moteur comprenant au moins un échangeur (12) de chaleur comportant deux circuits (31) d'échange, chacun des circuits (31) d'échange assurant une liaison fluidique entre les cylindres permettant de définir un volume, ledit échangeur étant en forme d'enroulement et disposé entre les cylindres du moteur.

2. Moteur à cycle Stirling selon la revendication 1, dans lequel la longueur de la tête (6) de piston ainsi que la longueur et la position axiale de l'anneau (9) isolant sont prévus de façon à ce que la tête (6) de piston soit toujours en contact avec l'anneau (9) isolant quelle que soit la position du piston (3) le long de sa course de fonctionnement normal.

3. Moteur à cycle Stirling selon la revendication 1, dans lequel le matériau de la tête (6) de piston isolante et/ou de l'anneau (9) isolant est un matériau céramique.

4. Moteur à cycle Stirling selon la revendication 1, comprenant un module (16) de transformation du mouvement alternatif axial des tiges (8) de pistons en mouvement rotatif, ledit module comportant un axe de rotation (17) de sortie commandé en rotation par un plateau cyclique (18) annulaire connecté d'une part aux tiges (8) de pistons par l'intermédiaire de bielles (32), et d'autre part à l'axe de rotation (17) de sortie, une noix d'inclinaison (19) bi-axiale servant d'interface entre le plateau cyclique annulaire et l'axe de rotation de sortie.

5. Moteur à cycle Stirling selon la revendication 4, dans lequel la noix d'inclinaison (19) comprend une ouverture cylindrique interne (20) d'axe R-R servant de logement à l'axe de rotation (17) de sortie et une bague cylindrique externe (21) d'axe P-P prévue pour interfacer avec le plateau cyclique (18) par l'entremise de roulements (22), l'axe R-R de l'ouverture cylindrique interne et l'axe P-P de la bague cylindrique externe formant entre eux un angle Ω compris entre 15° et 40° en position d'inclinaison maximale du plateau cyclique, et plus préférentiellement entre 18°et 22°.

6. Moteur à cycle Stirling selon l'une quelconque des revendications 4 ou 5, dans lequel le moteur comporte un châssis et dans lequel l'axe de rotation (17) de sortie traverse la noix d'inclinaison (19) et est fixé libre en rotation au châssis à ses deux extrémités.

## Patentansprüche

1. Stirlingmotor (1) mit einem Satz von Kolben (3) und Zylindern (2), wobei jeder der Zylinder (2) eine Heißzone (4) und eine Kaltzone (5) aufweist, wobei jeder der Kolben (3) einen Kolbenkörper (7), der mit einer Kolbenstange (8) verbunden ist, und einen isolierenden Kolbenkopf (6) aufweist, der am Ende des Kolbenkörpers angeordnet ist (7) verbunden ist, wobei jeder der Zylinder (2) außerdem einen Isolierring (9) aufweist, der zwischen der heißen Zone (4) und der kalten Zone (5) des Zylinders (2) angeordnet ist, **dadurch gekennzeichnet, dass** die Länge des Kolbenkopfs (6) größer ist als die Länge der heißen Zone (4) und dass es sich bei dem Motor um einen Motor vom Alpha-Typ mit vier doppeltwirkenden Kolben handelt, die auf vier mit Arbeitsgas gefüllte Volumen (A, B, C, D) wirken, die mit Arbeitsgas gefüllt und gemäß dem Stirling-Zyklus um 90° phasenverschoben sind, wobei der Motor mindestens einen Wärmetauscher (12) mit zwei Austauschkreisläufen (31) umfasst, wobei jeder der Austauschkreisläufe (31) eine Fluidverbindung zwischen den Zylindern herstellt, um ein Volumen zu definieren, wobei der Wärmetauscher spiralförmig ist und zwischen den Zylindern des Motors angeordnet ist.

2. Stirlingmotor nach Anspruch 1, bei dem die Länge des Kolbenkopfs (6) und die Länge und axiale Position des Isolierrings (9) so ausgelegt sind, dass der Kolbenkopf (6) unabhängig von der Position des Kolbens (3) entlang seines normalen Arbeitshubs immer in Kontakt mit dem Isolierring (9) steht.

3. Stirlingmotor nach Anspruch 1, wobei das Material des isolierenden Kolbenkopfs (6) und/oder des Isolierrings (9) ein Keramikmaterial ist.

4. Stirlingmotor nach Anspruch 1, mit einem Modul (16) zum Umwandeln der axialen Hin- und Herbewegung der Kolbenstangen (8) in eine Drehbewegung, wobei das Modul eine Ausgangsdrehachse (17) umfasst, deren Drehung durch eine ringförmige Taumelscheibe (18) gesteuert wird, die einerseits über Verbindungsstangen (32) mit den Kolbenstangen (8) verbunden ist und andererseits mit der Ausgangsdrehachse (17) verbunden ist, wobei eine zweiachsige Kippnabe als Schnittstelle zwischen der ringförmigen Taumelscheibe und der Ausgangsdrehachse dient.

5. Stirlingmotor nach Anspruch 4, bei dem die Kippnabe (19) eine innere zylindrische Öffnung (20) mit der Achse R-R, die als Gehäuse für die Ausgangsdrehachse (17) dient, und einen äußeren zylindrischen Ring (21) mit der Achse P-P umfasst, der dazu bestimmt ist, mittels Lagern (22) mit der Taumelscheibe (18) verbunden zu werden, wobei die Achse R-R der inneren zylindrischen Öffnung und die Achse P-P des äußeren zylindrischen Rings in der maximalen Neigungsposition der Taumelscheibe einen Winkel Omega zwischen 15° und 40° und vorzugsweise zwischen 18° und 22° bilden.

6. Stirlingmotor nach einem der Ansprüche 4 oder 5, wobei der Motor einen Rahmen umfasst und wobei die Ausgangsdrehachse (17) durch die Kippnabe (19) verläuft und an beiden Enden frei drehbar am Rahmen befestigt ist.

## Claims

1. Stirling cycle engine (1) comprising a set of pistons (3) and cylinders (2), each of the cylinders (2) comprising a hot zone (4) and a cold zone (5), in which each of the pistons (3) comprises a piston body (7) connected to a piston rod (8) and an insulating piston head (6) arranged at the end of the piston body (7), each of the cylinders (2) also comprising an insulating ring (9) arranged between the hot zone (4) and the cold zone (5) of said cylinder (2), **characterized in that** the length of the piston head (6) is greater than the length of the hot zone (4), and **in that** the engine is of the alpha type with four double-acting pistons acting on four volumes (A, B, C, D) filled with working gas and phase-shifted by 90° according to the Stirling cycle, said engine comprising at least one heat exchanger (12) comprising two exchange circuits (31), each of the exchange circuits (31) providing a fluid connection between the cylinders to define a volume, said exchanger being coil-shaped and disposed between the cylinders of the engine.

2. Stirling cycle engine according to claim 1, in which the length of the piston head (6) and the length and axial position of the insulating ring (9) are designed such that the piston head (6) is always in contact with the insulating ring (9) regardless of the position of the piston (3) along its normal operating stroke.

3. Stirling cycle engine according to claim 1, wherein the material of the insulating piston head (6) and/or the insulating ring (9) is a ceramic material.

4. Stirling cycle engine according to claim 1, comprising a module (16) for converting the axial reciprocating motion of the piston rods (8) into rotary motion, said module comprising an output rotation axis (17) controlled in rotation by an annular cyclic swashplate (18) connected on the one hand to the piston rods (8) by means of connecting rods (32), and on the other hand to the output rotation axis (17), a bi-axial tilt hub serving as an interface between the annular cyclic swashplate and the output rotation axis.

5. Stirling cycle engine according to claim 4, in which the tilt hub (19) includes an internal cylindrical opening (20) with axis R-R serving as a housing for the output rotation axis (17) and an external cylindrical ring (21) with axis P-P designed to interface with the cyclic swashplate (18) by means of bearings (22), the axis R-R of the internal cylindrical opening and the axis P-P of the external cylindrical ring forming an angle Omega between them of between 15° and 40° in the maximum tilt position of the cyclic swashplate, and more preferably between 18° and 22°.

6. Stirling cycle engine according to any of claims 4 or 5, wherein the engine comprises a frame and wherein the output rotation axis (17) passes through the tilt hub (19) and is freely rotatably attached to the frame at both ends.
